# EUROPEAN PATENT SPECIFICATION

(11) **EP 2 858 403 B1**
(45) Date of publication and mention of the grant of the patent: **02.11.2016**
(21) Application number: 13793454.3
(22) Date of filing: 03.05.2013
(51) Int. Cl.: H04W 24/00

(54) **METHOD, SYSTEM AND RELATED APPARATUS FOR RELEASING LOW PRIORITY AND/OR EAB**
VERFAHREN, SYSTEM UND ZUGEHÖRIGE VORRICHTUNG ZUR FREIGABE VON GERINGER PRIORITÄT UND/ODER EAB
PROCÉDÉ, SYSTÈME ET APPAREIL CORRESPONDANT POUR LIBÉRER UNE BASSE PRIORITÉ ET/OU UNE EAB

(30) Priority: 25.05.2012 CN 201210166903
(43) Date of publication of application: 08.04.2015
(73) Proprietor: ZTE Corporation, Shenzhen, Guangdong 518057 (CN)
(72) Inventor: XU, Hui, Shenzhen Guangdong 518057 (CN)
(74) Representative: Gevers Patents
(86) International application number: PCT/CN2013/075139
(87) International publication number: WO 2013/174201

(56) References cited:
- CN-A- 102 469 503
- VODAFONE: "CT1 Impacts and open issues of introducing dual priority service", 3GPP DRAFT; C1-120145-DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Xiamen (P.R. China); 20120206 - 20120210, 30 January 2012 (2012-01-30), XP050556469, [retrieved on 2012-01-30]
- HUAWEI ET AL: "Adding new NAS configuration parameters for SIMTC", 3GPP DRAFT; C6-120277, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG6, no. Kyoto, Japan; 20120522 - 20120525, 24 May 2012 (2012-05-24), XP050593171, [retrieved on 2012-05-24]
- ERICSSON ET AL: "Extended access barring for MTC devices", 3GPP DRAFT; R2-113030 EXTENDED ACCESS BARRING FOR MTC DEVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495310, [retrieved on 2011-05-03]
- 'CT1 IMPACTS AND OPEN ISSUES OF INTRODUCING DUAL PRIORITY SERVIce' 3GPP TSG CT WG1 MEETING #76, C1-120145 13 February 2012, XIAMEN, CHINA, pages 1 - 2, XP050556469
- 'Extended access barring for MTC devices' 3GPP TSG-RAN WG2 #74, R2-113030 03 May 2011, BARCELONA, SPAIN, XP050495310

## Description

### TECHNICAL FIELD

The disclosure relates to the wireless communication technology, and more particularly to a method, system and related device for overriding low priority and/or Extended Access Bar (EAB).

### BACKGROUND

The Machine to Machine (M2M) technology refers to all the techniques and methods for establishing connection between machines. The M2M idea appeared in the 1990s, but it only remains on the theoretical phase. After the year 2000, with the development of mobile communications technology, it is possible to organize machines to access network by using the mobile communications technology. About from the year 2002, an M2M service starts to appear on the market and develop rapidly in the following years; the M2M service becomes the centre of attention from many communication equipment manufacturers and telecommunication operating companies. At present, people are outnumbered by machines all over the world, thus a good market prospect of the M2M technology can be anticipated in advance.

A study on M2M communication application scenarios shows that providing M2M communication on a mobile network has a potential market prospect. However, the M2M service puts forward a lot of new requirements to system; for strengthening the competitiveness of a mobile network on this aspect, it is necessary to optimize existing mobile network, so as to support the M2M communication more effectively.

Existing mobile communication network is mainly designed aiming at the communication between person and person, thus the communication between machine and machine and the communication between person and machine are not optimized sufficiently. In addition, how an operating company can provide the M2M communication service with low cost is also the key to success in deployment of the M2M communication.

Based on the conditions above, it is necessary to present a solution that the mobile network supports the M2M communication. The solution is required to make maximum reuse of existing network, reduce the influence of lots of M2M communication on a network, and reduce the complexity of operation and maintenance.

Currently, competition on the telecommunication market grows increasingly, the fee is plummeting, the profit margin of operating companies is dropping, and the communication market based on people is tending to be saturated; thus, the M2M technology is a new development opportunity for the operating companies.

For using resources of a mobile network effectively, the 3rd Generation Partnership Project (3GPP) puts forward Machine Type Communication (MTC), including services of M2M communication and Machine to Man communication; the scope of the services is far beyond the past Human to Human (H2H) communication; the MTC is very different from existing H2H communication mode in access control, charging, security, Quality of Service (QoS), service mode and other aspects.

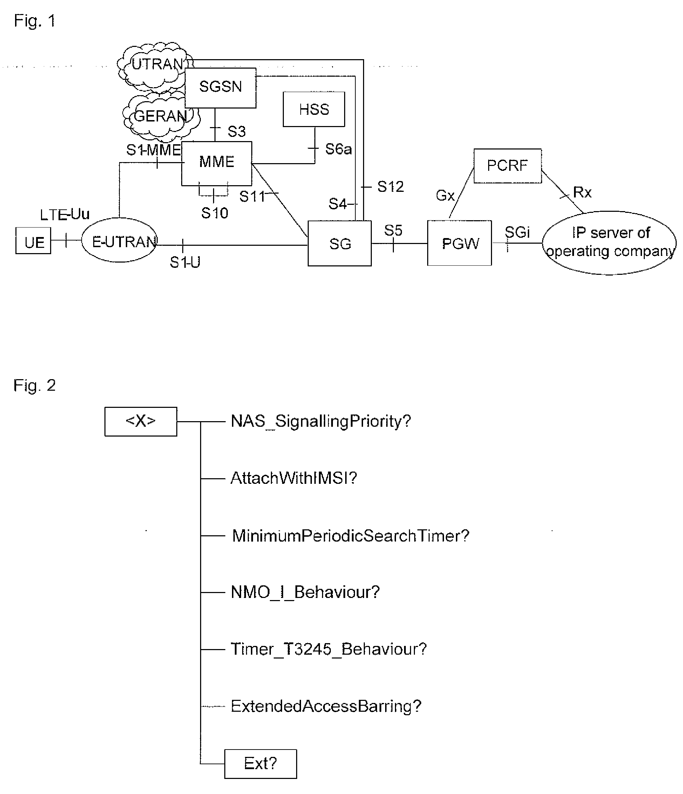

Fig. 1 is a system architecture diagram under a non-roaming scenario in the 3GPP of the prior art. As shown in Fig. 1, an Evolved Packet System (EPS) of 3GPP includes a radio access network (for example, a Universal Mobile Telecommunications System Terrestrial Radio Access Network (UTRAN), an Evolved UTRAN (E-UTRAN), GSM/EDGE Radio Access Network (GERAN)) and a core network. An Evolved Packet Core (EPC) network includes a Mobility Management Entity (MME), a Serving Gateway (SG), a Packet Data Network (PDN) Gateway (PGW) and other network elements; a GPRS core network includes a Serving GPRS Support Node (SGSN) and other elements; the E-UTRAN includes an Evolved Node B (eNB).

There are a large number of User Equipment (UE) with MTC function (which may be called MTC UE), so it may cause network congestion; for avoiding network congestion, a mechanism adopting backoff time is presented in the 3GPP; the mechanism includes a session management backoff timer and a mobility management backoff timer. Generally, the backoff timer is sent, in a rejection message, to the UE by a network side through Non Access Stratum (NAS) signalling. For reducing network load, it is also presented in the 3GPP that Extended Access Bar (EAB) performs access control to the MTC UE.

The MTC UE is generally not sensitive to time delay, so it is considered as UE at low priority. There is a priority indicator and an EAB indicator stored in a Universal Subscriber Identity Module (USIM), for configuring whether UE is at low priority and complies with EAB control. The operating company sends configuration data to the USIM through an Open Mobile Alliance (OMA) Device Management (DM) server. Fig 2 is a diagram of NAS configuration parameters in a USIM card in the 3GPP version Re1-11; as shown in Fig. 2, in the 3GPP version Re1-11, a low priority indicator and an EAB indicator appear in the USIM simultaneously.

For meeting the requirement of technology development of a mobile network, some MTC applications may have normal priority, such as real-time monitoring and failure reporting; common UE added with an MTC function module may serve as MTC UE; thus, the UE may have dual priority, that is, low priority and normal priority. However, based on the existing technology, there is only a low priority indicator and an EAB indicator in the USIM; the existing technology does not disclose related technical solution about how to indicator the dual priority and how to configure EAB for the dual-priority UE, which facilitates the application and promotion of the dual-priority UE.

C1-120145, 3GPP TSG CT WG1 Meeting #76, Xiamen (P.R. China), 6-10 February 2012, discusses CT1 impacts and open issues of introducing dual priority service.

C6-120277, 3GPP TSG CT6 Meeting #64, Kyoto, Japan, 22-25 May 2012, discusses adding new NAS configuration parameter for SIMTC.

### SUMMARY

In view of this, a main purpose of the disclosure is to provide a method, system and related device for overriding low priority and/or EAB, which facilitates the application and promotion of dual-priority UE.

To this end, a technical solution of the disclosure is implemented as follows.

A method for overriding low priority and/or EAB is provided, as recited in claim 1.

A system for overriding low priority and/or EAB is provided, as recited in claim 6.

Dual-priority UE is provided, as recited in claim 9.

According to the method, system and related device for overriding low priority and/or EAB in the embodiments of the disclosure, an OMA DM server sends dual-priority UE a low priority overriding indicator and/or an EAB overriding indicator; the dual-priority UE determines, according to the low priority overriding indicator and/or the EAB overriding indicator, whether to override low priority and/or EAB. The embodiments of the disclosure determine an EAB processing manner of dual-priority UE, implements NAS functional parameter management for the dual-priority UE, and facilitates the application and promotion of the dual-priority UE.

### BRIEF DESCRIPTION OF THE DRAWINGS

Fig. 1 is a system architecture diagram under a non-roaming scenario in the 3GPP of the existing technology;
Fig. 2 is a diagram of an NAS configuration parameter in a USIM card in the 3GPP version Re1-11;
Fig. 3 is a flowchart of embodiment 1 of the disclosure;
Fig. 4 is a diagram of an NAS configuration parameter in a USIM card of embodiment 1 of the disclosure;
Fig. 5 is a flowchart of embodiment 2 of the disclosure;
Fig. 6 is a flowchart of embodiment 3 of the disclosure;
Fig. 7 is a flowchart of embodiment 4 of the disclosure;
Fig. 8 is a diagram of a connection relationship among an OMA DM server, dual-priority UE, an eNB and an MME/SGSN in an embodiment of the disclosure; and
Fig. 9 is a diagram of a connection relationship between a receiving module and a USIM card which are in the dual-priority UE in an embodiment of the disclosure.

### DETAILED DESCRIPTION

The basic idea of the embodiments of the disclosure is that: an OMA DM server sends a low priority overriding indicator and/or an EAB overriding indicator to dual-priority UE; and the dual-priority UE determines whether to override low priority and/or EAB according to the low priority overriding indicator and/or the EAB overriding indicator.

In an embodiment of the disclosure, an operating company can configure two NAS indicators for the dual-priority UE, one aims at overriding the low priority, and the other aims at overriding the EAB; the indicator usually configures a parameter in a USIM through an OMA DM protocol; it should be noted that it is feasible to only configure any one of the two indicators.

Optionally, the method further includes that: the dual-priority UE stores the low priority overriding indicator and/or the EAB overriding indicator in the USIM card.

Optionally, the dual-priority UE determining whether to override low priority and/or EAB according to the low priority overriding indicator and/or the EAB overriding indicator is that:
after the dual-priority UE initiated a low priority request to the 3GPP network side, and under condition that the dual-priority UE has received an EAB rejection message from the 3GPP network side, if it is determined by the dual-priority UE that a low priority overriding indicator and/or an EAB overriding indicator are/is in the USIM card, and the low priority overriding indicator and/or the EAB overriding indicator indicate/indicates permission to override low priority and/or EAB, then the dual-priority UE overrides the low priority and/or EAB, and initiates a normal priority request to the 3GPP network side; or else, the dual-priority UE does not override the low priority and/or EAB, and can not initiate a normal priority request to the 3GPP network side;
after the dual-priority UE initiated a low priority request to the 3GPP network side, and under condition that the dual-priority UE has received a rejection message carrying backoff time from the 3GPP network side, if it is determined by the dual-priority UE that a low priority overriding indicator is in the USIM card, and the low priority overriding indicator indicates permission to override low priority, then the dual-priority UE overrides the low priority, and initiates a normal priority request to the 3GPP network side; or else, the dual-priority UE does not override the low priority, and cannot initiate a normal priority request to the 3GPP network side;
if the dual-priority UE receives a rejection message carrying backoff time from the 3GPP network side after initiating a normal priority request to the 3GPP network side, the dual-priority UE cannot initiate a subsequent request before release or relief of the network side congestion.

The dual-priority UE will report corresponding priority to the network side when initiating a request (such as a mobility management request or a session management request); for example, the dual-priority UE indicates priority when initiating a PDN connection request; generally, different priority requests correspond to different PDN connections.

Optionally, before the dual-priority UE receives an EAB rejection message from the 3GPP network side, the method further includes that: an MME/SGSN indicates an EAB parameter to an eNB through NAS signalling; the eNB sends an EAB rejection message to the dual-priority UE after receiving the indication; and the EAB rejection message indicates the EAB parameter.

Optionally, before the dual-priority UE receives a rejection message carrying backoff time from the 3GPP network side, the method further includes that: an eNB or an MME/SGSN determines backoff time, and sends a rejection message carrying the backoff time to the dual-priority UE.

Optionally, a request that the dual-priority UE initiates to the 3GPP network side is a mobility management request or a session management request.

Correspondingly, an embodiment of the disclosure further discloses a system for overriding low priority and/or EAB; the system includes an OMA DM server and dual-priority UE; wherein,
the OMA DM server is configured to send a low priority overriding indicator and/or an EAB overriding indicator to the dual-priority UE; and
the dual-priority UE is configured to determine whether to override low priority and/or EAB according to the low priority overriding indicator and/or the EAB overriding indicator.

Optionally, the dual-priority UE is further configured to store the low priority overriding indicator and/or the EAB overriding indicator in a USIM card.

Optionally, the system further includes a 3GPP network side;
the dual-priority UE is specifically configured to, after initiating a low priority request to the 3GPP network side and under condition of receiving an EAB rejection message from the 3GPP network side, determine whether a low priority overriding indicator and/or an EAB overriding indicator are/is in the USIM card, and whether the low priority overriding indicator and/or the EAB overriding indicator indicate/indicates permission to override low priority and/or EAB; if it is determined that a low priority overriding indicator and/or an EAB overriding indicator are/is in the USIM card, and the low priority overriding indicator and/or the EAB overriding indicator indicate/indicates permission to override low priority and/or EAB, then the dual-priority UE overrides the low priority and/or EAB, and initiates a normal priority request to the 3GPP network side; or else, the dual-priority UE does not override the low priority and/or EAB, and cannot initiate a normal priority request to the 3GPP network side; besides, the dual-priority UE is specifically configured to, after initiating a low priority request to the 3GPP network side and under condition of receiving a rejection message carrying backoff time from the 3GPP network side, determine whether a low priority overriding indicator is in the USIM card, and whether the low priority overriding indicator indicates permission to override low priority; if it is determined that a low priority overriding indicator is in the USIM card and the low priority overriding indicator indicates permission to override low priority, the dual-priority UE overrides the low priority, and initiates a normal priority request to the 3GPP network side; or else, the dual-priority UE does not override the low priority, and cannot initiate a normal priority request to the 3GPP network side; furthermore, the dual-priority UE is specifically configured to, after initiating a normal priority request to the 3GPP network side and under condition of receiving a rejection message carrying backoff time from the 3GPP network side, not initiate a subsequent request before release or relief of the network side congestion.

Optionally, the network side includes an MME/SGSN and/or an eNB;
the MME/SGSN is configured to, after receiving a request from the dual-priority UE, indicate an EAB parameter to the eNB through NAS signalling, or, determine backoff time and send the dual-priority UE a rejection message carrying the backoff time; and
the eNB is configured to, after receiving the indication from the MME/SGSN, send an EAB rejection message to the dual-priority UE, wherein the EAB rejection message indicates an EAB parameter, or determine backoff time and send the dual-priority UE a rejection message carrying the backoff time.

Correspondingly, an embodiment of the disclosure further discloses an OMA DM server; the OMA DM server is configured to send a low priority overriding indicator and/or an EAB overriding indicator to dual-priority UE.

Correspondingly, an embodiment of the disclosure further discloses dual-priority UE; the dual-priority UE includes a receiving module, a determining module and an executing module; wherein,
the receiving module is configured to receive a low priority overriding indicator and/or an EAB overriding indicator sent by an OMA DM server;
the determining module is configured to determine whether to override low priority and/or EAB according to the low priority overriding indicator and/or the EAB overriding indicator; and
the executing module is configured to execute corresponding operation according to a determination result of the determining module.

Optionally, the dual-priority UE further includes a USIM card;
the receiving module is further configured to, after receiving a low priority overriding indicator and/or an EAB overriding indicator sent by the OMA DM server, store the low priority overriding indicator and/or the EAB overriding indicator in the USIM card.

Optionally, the determining module is specifically configured to, after the dual-priority UE initiates a low priority request to the 3GPP network side, and under condition that the dual-priority UE has received an EAB rejection message from the 3GPP network side, determine whether a low priority overriding indicator and/or an EAB overriding indicator are/is in the USIM card, and whether the low priority overriding indicator and/or the EAB overriding indicator indicate/indicates permission to override low priority and/or EAB; if it is determined that a low priority overriding indicator and/or an EAB overriding indicator are/is in the USIM card, and the low priority overriding indicator and/or the EAB overriding indicator indicate/indicates permission to override low priority and/or EAB, then the determining module determines to override the low priority and/or EAB; or else, the determining module determines not to override the low priority and/or EAB; besides, the determining module is specifically configured to, after the dual-priority UE initiates a low priority request to the 3GPP network side, and under condition that the dual-priority UE has received a rejection message carrying backoff time from the 3GPP network side, determine whether a low priority overriding indicator is in the USIM card, and whether the low priority overriding indicator indicates permission to override low priority; if it is determined that a low priority overriding indicator is in the USIM card and the low priority overriding indicator indicates permission to override low priority, the determining module determines to override the low priority; or else, the determining module determines not to override the low priority; furthermore, the determining module is specifically configured to, after initiating a normal priority request to the 3GPP network side and under condition of receiving a rejection message carrying backoff time from the 3GPP network side, not initiate a subsequent request before determining release or relief of the network side congestion;
the executing module is specifically configured to, when the determining module determines to override the low priority and/or EAB, initiate a normal priority request to the 3GPP network side; when the determining module determines not to override the low priority and/or EAB, the executing module cannot subsequently initiate a normal priority request to the 3GPP network side.

Through the embodiments of the disclosure, the NAS functional parameter management for the dual-priority UE can be implemented, thus facilitating the application and promotion of the dual-priority UE. The disclosure is elaborated below in combination with embodiments.

### Embodiment 1

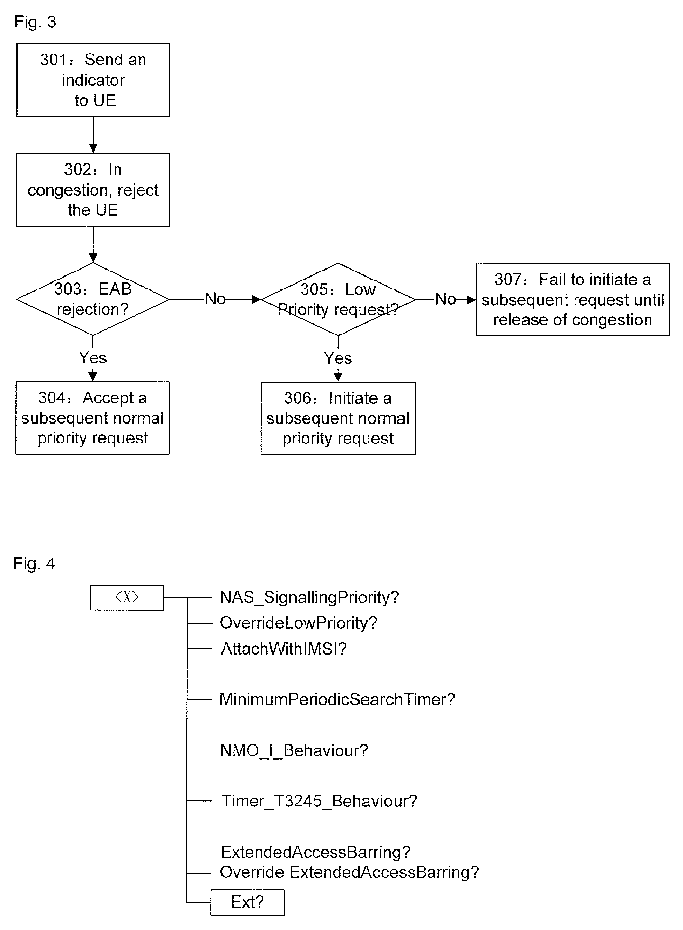

Fig. 3 is a flowchart of embodiment 1 of the disclosure; as shown in Fig. 3, the flow includes the following steps.

Step 301: An operating company sends indicator data to dual-priority UE, and the dual-priority UE stores the indicator data in a USIM card.

Here, the operating company sends the indicator data to the UE through an OMA DM server; the sending may be carried out by using the Over the Air (OTA) technology; the dual-priority UE may be the UE simultaneously supporting low priority access and normal priority access.

The indicator data includes a low priority overriding indicator and an EAB overriding indicator; optionally, the indicator includes two values, that is, 1 and 0; wherein, 1 indicates permission to override, and 0 indicates prohibition to override. In this embodiment, both the low priority overriding indicator and the EAB overriding indicator indicate permission to override. The diagram of an NAS configuration parameter in the USIM card of this embodiment is shown in Fig. 4.

STEP 302: A network side is in congestion, a UE request from the dual-priority UE is rejected.

Here, the network side may include at least one of the followings: an eNB, an MME and an SGSN; the congestion may be the access network congestion or the core network congestion;
the UE request may be rejected through the backoff time of network side or the EAB, which depends on the network side; the UE request includes the mobility management request or the session management request; if the UE initiates a PDN connection request, the PDN connections that the different priorities correspond to are different, and different PDN connections may belong to the same or different Access Point Name (APN).

STEP 303: The dual-priority UE determines whether it is an EAB rejection, if it is an EAB rejection, STEP 304 is then executed; or else, STEP 305 is then executed.

The EAB rejection means that an eNB sends an EAB rejection message to the dual-priority UE according to NAS indication.

STEP 304: The dual-priority UE initiates a subsequent normal priority request to the network side, and the network side accepts the subsequently initiated normal priority request.

It should be noted that, bearing the EAB rejection by the dual-priority UE means that the request is a low priority request; the subsequent normal priority request means a normal priority request that the same UE initiates subsequently.

STEP 305: The dual-priority UE determines whether the rejected UE request is a low priority request; if it is a low priority request, then STEP 306 is executed; or else, STEP 307 is executed.

If the UE request is not rejected by the EAB, and the request is rejected by the backoff time carried by the network side; then, the request may be at low priority or normal priority.

STEP 306: The dual-priority UE may initiate the subsequent normal priority request.

If the request is a low priority request, the subsequent normal priority request from the dual-priority UE is not influenced by the current backoff time, that is, the dual-priority UE may initiate a normal priority request.

STEP 307: The dual-priority UE cannot initiate a subsequent request until release or relief of congestion.

If the request is a normal priority request, the dual-priority UE is controlled by the current backoff time and cannot initiate a subsequent request; the subsequent request includes a low priority request and a normal priority request.

The UE may initiate a request subsequently after release or relief of congestion.

### Embodiment 2

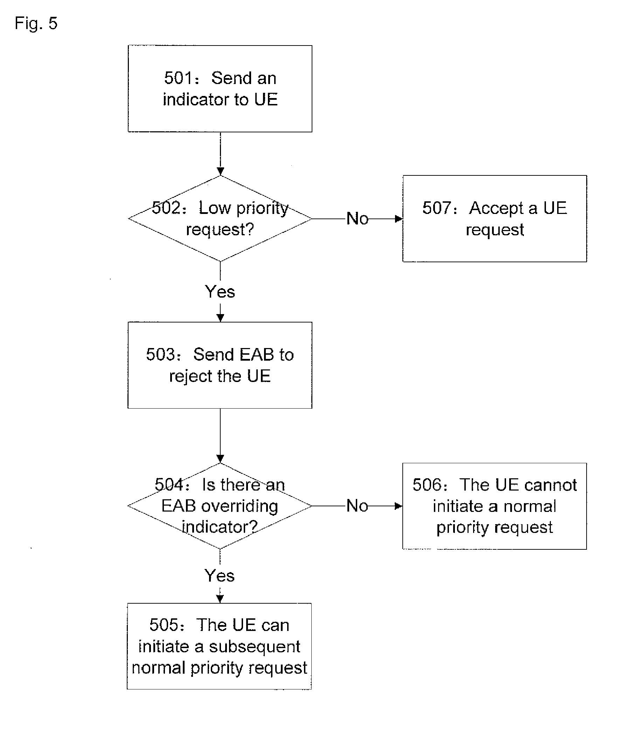

The scenario of the embodiment is that a network is in congestion, and a low priority request is rejected by the EAB. Fig. 5 is a flowchart of embodiment 2 of the disclosure; as shown in Fig. 5, the flow includes the following steps.

STEP 501: An operating company sends a dual-priority indicator parameter to dual-priority UE.

This step is same as STEP 301, so it will not be repeated here.

STEP 502: A network side is in congestion, determining whether a UE request from the dual-priority UE is a low priority request; if it is a low priority request, STEP 503 is then executed; or else, STEP 507 is then executed.

The low priority request is indicatorged by a request message initiated by the dual-priority UE; if the request has a low priority indicator, then it is a low priority request; or else, it is a normal priority request.

STEP 503: The network side sends EAB to reject the UE request.

The network side indicates the EAB to an eNB through NAS signalling; after receiving the indication, the eNB sends a system message to the dual-priority UE to indicate an EAB parameter;
when receiving the EAB indication, the dual-priority UE determines, according to an EAB configuration parameter in the USIM card, whether to bear an EAB control; if the UE determines to bear the EAB control, then the UE request is rejected. The dual-priority UE in the embodiment is supposed to bear the EAB control.

STEP 504: The dual-priority UE determines whether an EAB overriding indicator are/is in the USIM card; if an EAB overriding indicator are/is in the USIM card and the indicator indicates permission to override, STEP 505 is then executed; or else, STEP 506 is then executed.

The EAB overriding indicator means that if the parameter in the USIM card is 1, it is permitted to override the EAB or a normal priority does not bear the EAB control;
It should be noted that, generally, the EAB overriding indicator and the low priority overriding indicator appear simultaneously.

STEP 505: The dual-priority UE may initiate a normal priority request subsequently.

The dual-priority UE may initiate a normal priority request; the request may adopt different PDN connections, which belong to the same or different APNs.

It should be noted that in the current version Re1-11, the EAB only aims at the low priority request, but the subsequent version does not exclude the situation that the EAB aims the normal priority request.

STEP 506: The dual-priority UE cannot initiate a normal priority request.

STEP 507: The network side accepts the normal priority request initiated by the UE, and the flow ends.

### Embodiment 3

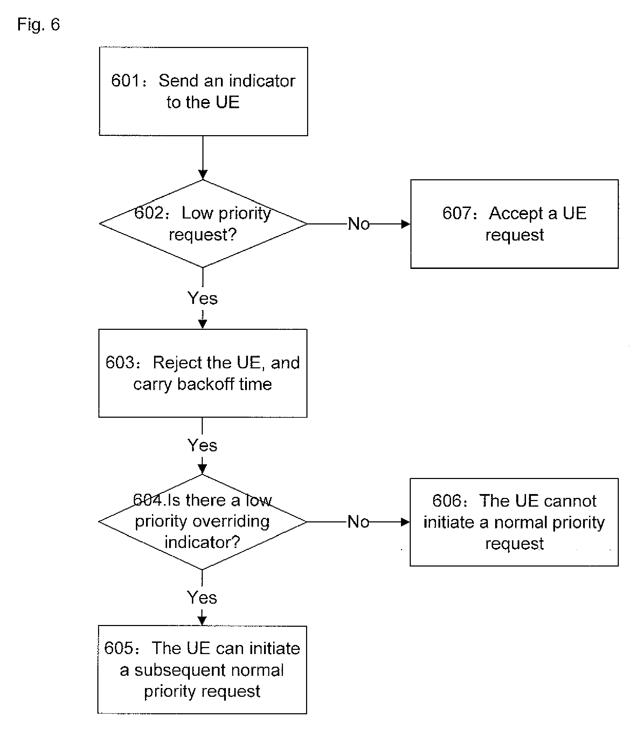

The scenario of the embodiment is that a network is in congestion, and a network side carries backoff time to reject a low priority request. Fig. 6 is a flowchart of embodiment 3 of the disclosure; as shown in Fig. 6, the flow includes the following steps.

STEP 601: An operating company sends a dual-priority indicator parameter to UE.

This step is same as STEP 401, so it will not be repeated here.

STEP 602: The network side is in congestion, determining whether a UE request initiated by the dual-priority UE is a low priority request; if it is a low priority request, STEP 603 is then executed; or else, STEP 607 is then executed.

This step is same as STEP 502, so it will not be repeated here.

STEP 603: The network side sends a rejection message to the dual-priority UE, and carries the backoff time in the rejection message.

The network side is at least one of the followings: an eNB, an MME and an SGSN;
the rejection message is a Radio Resource Control (RRC) rejection message or an NAS rejection message;
the backoff time indicates that the UE should not initiate the same request in corresponding time.

STEP 604: The dual-priority UE determines whether a low priority overriding indicator is in the USIM card; if it is in the USIM card, STEP 605 is then executed; or else, STEP 606 is then executed.

The low priority overriding indicator means that if the parameter in the USIM card is 1, it is permitted to override the low priority or initiate a normal priority request.

It should be noted that, in the current version, the EAB overriding indicator and the low priority overriding indicator appear simultaneously.

STEP 605: The dual-priority UE may initiate a subsequent normal priority request.

If the low priority request of the dual-priority UE is rejected, the dual-priority UE may initiate a normal priority request subsequently;
the normal priority request and the low priority request belong to the same application.

STEP 606: The dual-priority UE cannot initiate a normal priority request.

STEP 607: The network side accepts a UE request from the dual-priority UE.

The network side accepts a normal priority request initiated by the dual-priority UE.

### Embodiment 4

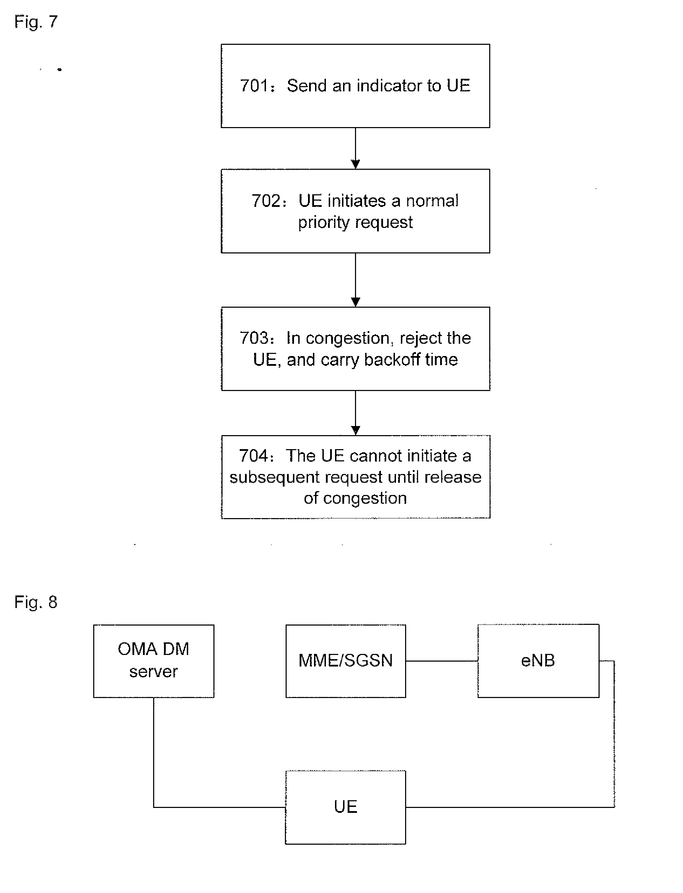

The scenario of the embodiment is that a network is in congestion, and a network side carries backoff time to reject a low priority request. Fig. 7 is a flowchart of embodiment 4 of the disclosure; as shown in Fig. 7, the flow includes the following steps.

STEP 701: An operating company sends a dual-priority indicator parameter to UE.

This step is same as STEP 401, so it will not be repeated here.

STEP 702: The dual-priority UE initiates a normal priority request.

STEP 703: The network side is in congestion; the network side sends a rejection message to the dual-priority UE, and includes backoff time in the rejection message.

STEP 704: The dual-priority UE cannot initiate a subsequent request until release or relief of congestion.

The subsequent request includes a low priority request and a normal priority request; the dual-priority UE cannot initiate request until release or relief of congestion.

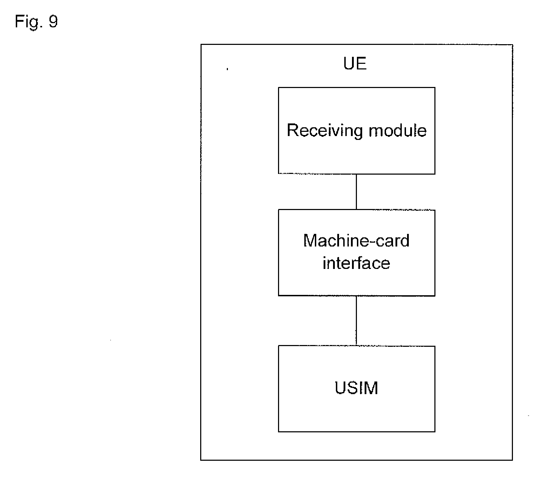

It should be noted that, in the embodiment of the disclosure, the connection relationship of an OMA DM server, dual-priority UE, an eNB and an MME/SGSN is shown in Fig. 8; there is a machine-card interface configured between the receiving module and the USIM card in the dual-priority UE; the detailed structure of the machine-card interface is shown in Fig. 9.

The above are only the preferred embodiments of the disclosure, and not intended to limit the scope of the claims of the disclosure.

## Claims

1. A method for overriding low priority and/or Extended Access Bar, EAB, comprising:
sending, by an Open Mobile Alliance, OMA, Device Management, DM, server, a low priority overriding indicator and/or an EAB overriding indicator to dual-priority User Equipment, UE;
storing, by the dual-priority UE, the low priority overriding indicator and/or the EAB overriding indicator in a Universal Subscriber Identity Module, USIM, card; and
determining, by the dual-priority UE, whether to override low priority and/or EAB according to the low priority overriding indicator and/or the EAB overriding indicator;
**characterized in that**,
determining, by the dual-priority UE, whether to override low priority and/or EAB according to the low priority overriding indicator and/or the EAB overriding indicator comprises that:
if the dual-priority UE determines that the low priority overriding indicator and/or the EAB overriding indicator are/is in the USIM card, and the low priority overriding indicator and/or the EAB overriding indicator indicate/indicates permission to override the low priority and/or the EAB, then the dual-priority UE overrides the low priority and/or the EAB, and initiates a normal priority request to a 3rd Generation Partnership Project, 3GPP, network side; or else, the dual-priority UE does not override the low priority and/or the EAB, and fails to initiate a normal priority request to the 3GPP network side.

2. The method according to claim 1, wherein determining, by the dual-priority UE, whether to override low priority and/or EAB according to the low priority overriding indicator and/or the EAB overriding indicator further comprises that:
after the dual-priority UE initiates a low priority request to the 3GPP network side, and under condition that the dual-priority UE has received a rejection message carrying backoff time from the 3GPP network side, if the dual-priority UE determines that the low priority overriding indicator is in the USIM card, and the low priority overriding indicator indicates permission to override the low priority, then the dual-priority UE overrides the low priority, and initiates a normal priority request to the 3GPP network side; or else, the dual-priority UE does not override the low priority, and fails to initiate a normal priority request to the 3GPP network side.

3. The method according to claim 1, wherein the determining step occurs after the dual-priority UE initiates a low priority request to the 3GPP network side and under a condition that the dual-priority UE has received an EAB rejection message from the 3GPP network side;
before receiving, by the dual-priority UE, the EAB rejection message from the 3GPP network side, the method further comprises:
indicating, by a Mobility Management Entity, MME, /Serving GPRS Support Node, SGSN, an EAB parameter to an Evolved Node B, eNB, through Non Access Stratum, NAS, signalling; and sending, by the eNB, an EAB rejection message to the dual-priority UE after receiving the indication, wherein the EAB rejection message indicates the EAB parameter.

4. The method according to claim 2, before receiving, by the dual-priority UE, the rejection message carrying backoff time from the 3GPP network side, further comprising:
determining, by the eNB or the MME/SGSN, backoff time, and sending a rejection message carrying the backoff time to the dual-priority UE.

5. The method according to any one of claims 1 to 4, wherein the request that the dual-priority UE initiates to the 3GPP network side is a mobility management request or a session management request.

6. A system for overriding low priority and/or Extended Access Bar, EAB, comprising an Open Mobile Alliance, OMA, Device Management, DM, server, and dual-priority User Equipment, UE; wherein
the OMA DM server is configured to send the dual-priority UE a low priority overriding indicator and/or an EAB overriding indicator; and
the dual-priority UE is configured to store the low priority overriding indicator and/or the EAB overriding indicator in a Universal Subscriber Identity Module, USIM, card, and determine whether to override low priority and/or EAB according to the low priority overriding indicator and/or the EAB overriding indicator;
**characterized in that**,
the system further comprises a 3rd Generation Partnership Project, 3GPP, network side;
wherein the dual-priority UE is specifically configured to determine whether the low priority overriding indicator and/or the EAB overriding indicator are/is in the USIM card, and whether the low priority overriding indicator and/or the EAB overriding indicator indicate/indicates permission to override the low priority and/or the EAB; if the dual-priority UE determines that the low priority overriding indicator and/or the EAB overriding indicator are/is in the USIM card, and the low priority overriding indicator and/or the EAB overriding indicator indicate/indicates permission to override the low priority and/or the EAB, then the dual-priority UE overrides the low priority and/or the EAB, and initiates a normal priority request to the 3GPP network side; or else, the dual-priority UE does not override the low priority and/or the EAB, and fails to initiate a normal priority request to the 3GPP network side.

7. The system according to claim 6, wherein the dual-priority UE is specifically configured to, after initiating a low priority request to the 3GPP network side and under condition of receiving a rejection message carrying backoff time from the 3GPP network side, determine whether the low priority overriding indicator is in the USIM card, and whether the low priority overriding indicator indicates permission to override the low priority; if the dual-priority UE determines that the low priority overriding indicator is in the USIM card and the low priority overriding indicator indicates permission to override the low priority, the dual-priority UE overrides the low priority, and initiates a normal priority request to the 3GPP network side; or else, the dual-priority UE does not override the low priority, and fails to initiate a normal priority request to the 3GPP network side.

8. The system according to claim 7, wherein the 3GPP network side comprises a Mobility Management Entity, MME,/Serving GPRS Support Node, SGSN, and/or an Evolved Node B, eNB;
wherein the MME/SGSN is configured to, after receiving a request from the dual-priority UE, indicate an EAB parameter to the eNB through Non Access Stratum, NAS, signalling, or, determine backoff time and send the dual-priority UE a rejection message carrying the backoff time; and
the eNB is configured to, after receiving the indication from the MME/SGSN, send the dual-priority UE an EAB rejection message which indicates an EAB parameter, or determine backoff time and send the dual-priority UE a rejection message carrying the backoff time.

9. Dual-priority User Equipment, UE, comprising a receiving module, a determining module and an executing module; wherein
the receiving module is configured to receive a low priority overriding indicator and/or an Extended Access Barring, EAB, overriding indicator sent by an Open Mobile Alliance, OMA, Device Management, DM, server;
the determining module is configured to determine whether to override low priority and/or EAB according to the low priority overriding indicator and/or the EAB overriding indicator; and
the executing module is configured to execute corresponding operation according to a determination result of the determining module;
the dual-priority UE further comprises a Universal Subscriber Identity Module, USIM, card, wherein the receiving module is further configured to, after receiving the low priority overriding indicator and/or the EAB overriding indicator sent by the OMA DM server, store the low priority overriding indicator and/or the EAB overriding indicator in the USIM card;
**characterized in that**,
the determining module is specifically configured to determine whether the low priority overriding indicator and/or the EAB overriding indicator are/is in a USIM card, and whether the low priority overriding indicator and/or the EAB overriding indicator indicate/indicates permission to override the low priority and/or the EAB; if the low priority overriding indicator and/or the EAB overriding indicator are/is in the USIM card, and the low priority overriding indicator and/or the EAB overriding indicator indicate/indicates permission to override the low priority and/or the EAB, then the determining module is configured to determine to override the low priority and/or the EAB; or else, the determining module is configured to determine not to override the low priority and/or EAB; and,
the executing module is specifically configured to, when the determining module determines to override the low priority and/or the EAB, initiate a normal priority request to a 3rd Generation Partnership Project, 3GPP, network side; when the determining module determines not to override the low priority and/or the EAB, the executing module fails to initiate a normal priority request to the 3GPP network side.

10. The dual-priority UE according to claim 7, wherein the determining module is specifically configured to, after the dual-priority UE initiates a low priority request to the 3GPP network side, and under condition that the dual-priority UE has received a rejection message carrying backoff time from the 3GPP network side, determine whether the low priority overriding indicator is in the USIM card, and whether the low priority overriding indicator indicates permission to override the low priority; if the low priority overriding indicator is in the USIM card and the low priority overriding indicator indicates permission to override low priority, the determining module is configured to determine to override the low priority; or else, the determining module is configured to determine not to override the low priority; and
the executing module is specifically configured to, when the determining module determines to override the low priority, initiate a normal priority request to the 3GPP network side; when the determining module determines not to override the low priority, the executing module fails to initiate a normal priority request to the 3GPP network side.

## Patentansprüche

1. Verfahren zum Übersteuern einer niederen Priorität und/oder einer erweiterten Zugriffsleiste (Extended Access Bar), EAB, umfassend:
Senden, durch einen Open Mobile Alliance, OMA, Gerätemanagement- (Device Management), DM, Server, eines Übersteuerungsindikators einer niederen Priorität und/oder eines Übersteuerungsindikators einer EAB zu einem Doppelprioritäts-Benutzergerät (User Equipment), UE;
Speichern, durch das Doppelprioritäts-Benutzergerät UE, des Übersteuerungsindikators einer niederen Priorität und/oder des Übersteuerungsindikators einer EAB in einer Universelles Teilnehmeridentitätsmodul- (Universal Subscriber Identity Module), USIM, Karte; und
Bestimmen, durch das Doppelprioritäts-UE, anhand des Übersteuerungsindikators einer niederen Priorität und/oder des Übersteuerungsindikators einer EAB, ob eine niedere Priorität und/oder eine EAB zu übersteuern sind;
**dadurch gekennzeichnet, dass**
das Bestimmen anhand des Übersteuerungsindikators einer niederen Priorität und/oder des Übersteuerungsindikators einer EAB, durch das Doppelprioritäts-UE, ob eine niedere Priorität und/oder eine EAB zu übersteuern sind, umfasst, dass:
wenn das Doppelprioritäts-UE bestimmt, dass der Übersteuerungsindikator einer niederen Priorität und/oder der Übersteuerungsindikator einer EAB in der USIM-Karte sind und der Übersteuerungsindikator einer niederen Priorität und/oder der Übersteuerungsindikator einer EAB eine Erlaubnis anzeigen, die niedere Priorität und/oder die EAB zu übersteuern, das Doppelprioritäts-UE die niedere Priorität und/oder die EAB übersteuert und eine normale Prioritätsanfrage an eine Netzwerkseite eines Partnerschaftsprojekts 3. Generation (3rd Generation Partnership Projekt) 3GPP einleitet; oder andernfalls das Doppelprioritäts-UE die niedere Priorität und/oder die EAB nicht übersteuert und keine normale Prioritätsanfrage an die 3GPP-Netzwerkseite einleitet.

2. Verfahren nach Anspruch 1, wobei das Bestimmen, durch das Doppelprioritäts-UE, anhand des Übersteuerungsindikators einer niederen Priorität und/oder des Übersteuerungsindikators einer EAB, ob eine niedere Priorität und/oder eine EAB zu übersteuern sind, des Weiteren umfasst, dass:
wenn, nachdem das Doppelprioritäts-UE eine niedere Prioritätsanfrage an die 3GPP-Netzwerkseite eingeleitet hat und unter einer Bedingung, dass das Doppelprioritäts-UE eine Ablehnungsmeldung, die eine Wartedauer (Backoff-Zeit) enthält, von der 3GPP-Netzwerkseite empfangen hat, das Doppelprioritäts-UE bestimmt, dass der Übersteuerungsindikator einer niederen Priorität in der USIM-Karte ist und der Übersteuerungsindikator einer niederen Priorität eine Erlaubnis anzeigt, die niedere Priorität zu übersteuern, das Doppelprioritäts-UE die niedere Priorität übersteuert und eine normale Prioritätsanfrage an die 3GPP-Netzwerkseite einleitet; oder andernfalls das Doppelprioritäts-UE die niedere Priorität nicht übersteuert und keine normale Prioritätsanfrage an die 3GPP-Netzwerkseite einleitet.

3. Verfahren nach Anspruch 1, wobei der Bestimmungsschritt erfolgt, nachdem das Doppelprioritäts-UE eine niedere Prioritätsanfrage an die 3GPP-Netzwerkseite eingeleitet hat und unter einer Bedingung, dass das Doppelprioritäts-UE eine EAB-Ablehnungsmeldung von der 3GPP-Netzwerkseite empfangen hat;
wobei vor dem Empfang, durch das Doppelprioritäts-UE, der EAB-Ablehnungsmeldung von der 3GPP-Netzwerkseite das Verfahren des Weiteren umfasst:
Anzeigen, durch eine Mobilitätsmanagementeinheit (Mobility Management Entity), MME/einen bedienenden GPRS-Unterstützungsknoten (Serving GPRS Support Node) SGSN, eines EAB-Parameters an einen entwickelten Knoten B (Evolved Node B), eNB, durch zugangsgesperrte Schicht- (Non Access Stratum), NAS, Signalisierung; und Senden, durch den eNB, einer EAB-Ablehnungsmeldung an das Doppelprioritäts-UE nach Empfang der Anzeige, wobei die EAB-Ablehnungsmeldung den EAB-Parameter anzeigt.

4. Verfahren nach Anspruch 3, das vor Empfang, durch das Doppelprioritäts-UE, der Ablehnungsmeldung, die die Wartezeit enthält, von der 3GPP-Netzwerkseite des Weiteren umfasst:
Bestimmen, durch den eBN oder die MME/den SGSN, einer Wartedauer und Senden einer Ablehnungsmeldung, die die Wartedauer enthält, zum Doppelprioritäts-UE.

5. Verfahren nach einem der Ansprüche 1 bis 4, wobei die Anfrage an die 3GPP-Netzwerkseite, die das Doppelprioritäts-UE einleitet, eine Mobilitätsmanagementanfrage oder eine Sitzungsmanagementanfrage ist.

6. System zum Übersteuern einer niederen Priorität und/oder einer erweiterten Zugriffsleiste (Extended Access Bar), EAB, umfassend einen Open Mobile Alliance, OMA, Gerätemanagement- (Device Management), DM, Server und ein Doppelprioritäts-Benutzergerät (User Equipment), UE; wobei
der OMA DM-Server konfiguriert ist, dem Doppelprioritäts-UE einen Übersteuerungsindikator einer niederen Priorität und/oder einen Übersteuerungsindikator einer EAB zu senden;
das Doppelprioritäts-UE konfiguriert ist, den Übersteuerungsindikator einer niederen Priorität und/oder den Übersteuerungsindikator einer EAB in einer Universelles Teilnehmeridentitätsmodul- (Universal Subscriber Identity Module), USIM, Karte zu speichern und anhand des Übersteuerungsindikators einer niederen Priorität und/oder des Übersteuerungsindikators einer EAB zu bestimmen, ob eine niedere Priorität und/oder eine EAB zu übersteuern sind;
**dadurch gekennzeichnet, dass**
das System eine Netzwerkseite eines Partnerschaftsprojekts 3. Generation (3rd Generation Partnership Projekt) 3GPP umfasst; wobei das Doppelprioritäts-UE im Speziellen konfiguriert ist zu bestimmen, ob der Übersteuerungsindikator einer niederen Priorität und/oder der Übersteuerungsindikator einer EAB in der USIM-Karte sind und ob der Übersteuerungsindikator einer niederen Priorität und/oder der Übersteuerungsindikator einer EAB eine Erlaubnis anzeigen, die niedere Priorität und/oder die EAB zu übersteuern; wenn das Doppelprioritäts-UE bestimmt, dass der Übersteuerungsindikator einer niederen Priorität und/oder der Übersteuerungsindikator einer EAB in der USIM-Karte sind und der Übersteuerungsindikator einer niederen Priorität und/oder der Übersteuerungsindikator einer EAB eine Erlaubnis anzeigen, die niedere Priorität und/oder die EAB zu übersteuern, das Doppelprioritäts-UE die niedere Priorität und/oder die EAB übersteuert und eine normale Prioritätsanfrage an die 3GPP-Netzwerkseite einleitet; oder andernfalls das Doppelprioritäts-UE die niedere Priorität und/oder die EAB nicht übersteuert und keine normale Prioritätsanfrage an die 3GPP-Netzwerkseite einleitet.

7. System nach Anspruch 6, wobei das Doppelprioritäts-UE im Speziellen konfiguriert ist, nach Einleiten einer niederen Prioritätsanfrage an die 3GPP-Netzwerkseite und unter einer Bedingung, dass es eine Ablehnungsmeldung, die eine Wartedauer (Backoff-Time) enthält, von der 3GPP-Netzwerkseite empfangen hat, zu bestimmen, ob der Übersteuerungsindikator einer niederen Priorität in der USIM-Karte ist und ob der Übersteuerungsindikator einer niederen Priorität eine Erlaubnis anzeigt, die niedere Priorität zu übersteuern; wenn das Doppelprioritäts-UE bestimmt, dass der Übersteuerungsindikator einer niederen Priorität in der USIM-Karte ist und der Übersteuerungsindikator einer niederen Priorität eine Erlaubnis anzeigt, die niedere Priorität zu übersteuern, das Doppelprioritäts-UE die niedere Priorität übersteuert und eine normale Prioritätsanfrage an die 3GPP-Netzwerkseite einleitet; oder andernfalls das Doppelprioritäts-UE die niedere Priorität nicht übersteuert und keine normale Prioritätsanfrage an die 3GPP-Netzwerkseite einleitet.

8. System nach Anspruch 7, wobei die 3GPP-Netzwerkseite eine (Mobility Management Entity), MME/einen bedienenden GPRS-Unterstützungsknoten (Serving GPRS Support Node) SGSN, und/oder einen entwickelten Knoten B (Evolved Node B), eNB, umfasst;
wobei die MME/der SGSN konfiguriert ist, nach Empfang einer Anfrage vom Doppelprioritäts-UE, einen EAB-Parameter an den eNB durch zugangsgesperrte Schicht- (Non Access Stratum), NAS, Signalisierung anzuzeigen oder eine Wartedauer zu bestimmen und eine Ablehnungsmeldung, die die Wartedauer enthält, zum Doppelprioritäts-UE zu senden; und
der eBN konfiguriert ist, nach Empfang der Anzeige von der MME/dem SGSN, dem Doppelprioritäts-UE eine EAB-Ablehnungsmeldung, die einen EAB-Parameter anzeigt, zu senden oder eine Wartedauer zu bestimmen und eine Ablehnungsmeldung, die die Wartedauer enthält, zum Doppelprioritäts-UE zu senden.

9. Doppelprioritäts-Benutzergerät (User Equipment), UE, umfassend ein Empfangsmodul, ein Bestimmungsmodul und ein Ausführungsmodul; wobei
das Empfangsmodul konfiguriert ist, einen Übersteuerungsindikator einer niederen Priorität und/oder einen Übersteuerungsindikator einer erweiterten Zugriffsleiste (Extended Access Bar), EAB zu empfangen, die von einem Open Mobile Alliance, OMA, Gerätemanagement- (Device Management), DM, Server gesendet werden;
das Bestimmungsmodul konfiguriert ist, anhand des Übersteuerungsindikators einer niederen Priorität und/oder des Übersteuerungsindikators einer EAB zu bestimmen, ob eine niedere Priorität und/oder eine EAB zu übersteuern sind; und
das Ausführungsmodul konfiguriert ist, gemäß einem Bestimmungsergebnis des Bestimmungsmoduls eine entsprechende Operation auszuführen;
das Doppelprioritäts-UE des Weiteren eine Universelles Teilnehmeridentitätsmodul- (Universal Subscriber Identity Module), USIM, Karte umfasst, wobei das Empfangsmodul des Weiteren konfiguriert ist, nach Empfang des Übersteuerungsindikators einer niederen Priorität und/oder des Übersteuerungsindikators einer EAB, die vom OMA DM-Server gesendet werden, den Übersteuerungsindikator einer niederen Priorität und/oder den Übersteuerungsindikator einer EAB in der USIM-Karte zu speichern;
**dadurch gekennzeichnet, dass**
das Bestimmungsmodul im Speziellen konfiguriert ist zu bestimmen, ob der Übersteuerungsindikator einer niederen Priorität und/oder der Übersteuerungsindikator einer EAB in der USIM-Karte sind, und ob der Übersteuerungsindikator einer niederen Priorität und/oder der Übersteuerungsindikator einer EAB eine Erlaubnis anzeigen, die niedere Priorität und/oder die EAB zu übersteuern; wenn der Übersteuerungsindikator einer niederen Priorität und/oder der Übersteuerungsindikator einer EAB in der USIM-Karte sind und der Übersteuerungsindikator einer niederen Priorität und/oder der Übersteuerungsindikator einer EAB eine Erlaubnis anzeigen, die niedere Priorität und/oder die EAB zu übersteuern, das Bestimmungsmodul konfiguriert ist zu bestimmen, die niedere Priorität und/oder die EAB zu übersteuern;
oder andernfalls das Bestimmungsmodul konfiguriert ist zu bestimmen, die niedere Priorität und/oder die EAB nicht zu übersteuern; und
das Ausführungsmodul im Speziellen konfiguriert ist, wenn das Bestimmungsmodul bestimmt, die niedere Priorität und/oder die EAB zu übersteuern, eine normale Prioritätsanfrage an eine Netzwerkseite eines Partnerschaftsprojekts 3. Generation (3rd Generation Partnership Projekt) 3GPP einzuleiten; wenn das Bestimmungsmodul bestimmt, die niedere Priorität und/oder die EAB nicht zu übersteuern, das Ausführungsmodul keine normale Prioritätsanfrage an eine Netzwerkseite 3GPP-Netzwerkseite einleitet.

10. Doppelprioritäts-UE nach Anspruch 7, wobei das Bestimmungsmodul im Speziellen konfiguriert ist, nachdem das Doppelprioritäts-UE eine niedere Prioritätsanfrage an die 3GPP-Netzwerkseite eingeleitet hat und unter einer Bedingung, dass das Doppelprioritäts-UE eine Ablehnungsmeldung, die eine Wartedauer (Backoff-Zeit) enthält, von der 3GPP-Netzwerkseite empfangen hat, zu bestimmen, ob der Übersteuerungsindikator einer niederen Priorität in der USIM-Karte ist und ob der Übersteuerungsindikator einer niederen Priorität eine Erlaubnis anzeigt, die niedere Priorität zu übersteuern; wenn der Übersteuerungsindikator einer niederen Priorität in der USIM-Karte ist und der Übersteuerungsindikator einer niederen Priorität eine Erlaubnis anzeigt, die niedere Priorität zu übersteuern, das Bestimmungsmodul konfiguriert ist zu bestimmen, die niedere Priorität zu übersteuern; oder andernfalls das Doppelprioritäts-UE das Bestimmungsmodul konfiguriert ist zu bestimmen, die die niedere Priorität nicht zu übersteuern; und
das Ausführungsmodul im Speziellen konfiguriert ist, wenn das Bestimmungsmodul bestimmt, die niedere Priorität zu übersteuern, eine normale Prioritätsanfrage an die 3GPP-Netzwerkseite einzuleiten; wenn das Bestimmungsmodul bestimmt, die niedere Priorität nicht zu übersteuern, das Bestimmungsmodul keine normale Prioritätsanfrage an die 3GPP-Netzwerkseite einleitet.

## Revendications

1. Procédé pour annulation de basse priorité et/ou d'interdiction d'accès étendue, EAB, comprenant :
l'envoi, par un serveur d'Alliance pour les Mobiles Ouverts, OMA - Gestion d'appareils Mobiles, DM, d'un indicateur d'annulation de basse priorité et/ou d'un indicateur d'annulation d'EAB à un équipement utilisateur, UE, à double priorité ;
le stockage, par l'UE à double priorité, de l'indicateur d'annulation de basse priorité et/ou de l'indicateur d'annulation d'EAB dans une carte de module d'identité d'abonné universel, USIM ; et
la détermination, par l'UE à double priorité, si oui ou non il convient d'annuler la basse priorité et/ou l'EAB en fonction de l'indicateur d'annulation de basse priorité et/ou de l'indicateur d'annulation d'EAB ;
**caractérisé en ce que**,
la détermination, par l'UE à double priorité, si oui ou non il convient d'annuler la basse priorité et/ou l'EAB en fonction de l'indicateur d'annulation de basse priorité et/ou de l'indicateur d'annulation d'EAB comprend ce qui suit :
si l'UE à double priorité détermine que l'indicateur d'annulation de basse priorité et/ou l'indicateur d'annulation d'EAB est/sont dans la carte USIM, et si l'indicateur d'annulation de basse priorité et/ou l'indicateur d'annulation d'EAB indique(nt) une permission d'annuler la basse priorité et/ou l'EAB, alors l'UE à double priorité annule la basse priorité et/ou l'EAB, et transmet une demande de priorité normale à un côté de réseau de projet de partenariat de troisième génération, 3GPP ; ou alors, l'UE à double priorité n'annule pas la basse priorité et/ou l'EAB, et ne transmet pas de demande de priorité normale au côté de réseau 3GPP.

2. Procédé selon la revendication 1, dans lequel la détermination, par l'UE à double priorité, si oui ou non il convient d'annuler la basse priorité et/ou l'EAB en fonction de l'indicateur d'annulation de basse priorité et/ou de l'indicateur d'annulation d'EAB comprend en outre ce qui suit :
après la transmission par l'UE à double priorité d'une demande de basse priorité au côté de réseau 3GPP, et à la condition que l'UE à double priorité ait reçu un message de rejet comportant un temps d'attente du côté de réseau 3GPP, si l'UE à double priorité détermine que l'indicateur d'annulation de basse priorité est dans la carte USIM, et que l'indicateur d'annulation de basse priorité indique une permission d'annuler la basse priorité, l'UE à double priorité annule la basse priorité, et transmet une demande de priorité normale au côté de réseau 3GPP ; ou alors, l'UE à double priorité n'annule pas la basse priorité, et ne transmet pas de demande de priorité normale au côté de réseau 3GPP.

3. Procédé selon la revendication 1, dans lequel l'étape de détermination se produit après la transmission par l'UE à double priorité d'une demande de basse priorité au côté de réseau 3GPP et à la condition que l'UE à double priorité ait reçu un message de rejet d'EAB du côté de réseau 3GPP ;
avant la réception, par l'UE à double priorité, du message de rejet d'EAB du côté de réseau 3GPP, le procédé comprend en outre :
l'indication, par un noeud de support de service GPRS, SGSN, d'entité de gestion de mobilité, MME, d'un paramètre d'EAB à un noeud B évolué, eNB, par le biais d'une signalisation de strate de non accès, NAS ; et l'envoi, par l'eNB, d'un message de rejet d'EAB à l'UE à double priorité après la réception de l'indication, dans lequel le message de rejet d'EAB indique le paramètre d'EAB.

4. Procédé selon la revendication 2, avant la réception, par l'UE à double priorité, du message de rejet comportant un temps d'attente du côté de réseau 3GPP, comprenant en outre :
la détermination, par l'eNB ou le MME/SGSN, d'un temps d'attente, et l'envoi d'un message de rejet comportant le temps d'attente à l'UE à double priorité.

5. Procédé selon l'une quelconque des revendications 1 à 4, dans lequel la demande que l'UE à double priorité transmet au côté de réseau 3GPP est une demande de gestion de mobilité ou une demande de gestion de session.

6. Système pour annulation de basse priorité et/ou d'interdiction d'accès étendue, EAB, comprenant un serveur d'Alliance pour les Mobiles Ouverts, OMA - Gestion d'appareils Mobiles, DM, et un équipement utilisateur, UE, à double priorité ; dans lequel
le serveur OMA DM est configuré pour envoyer à l'UE à double priorité un indicateur d'annulation de basse priorité et/ou un indicateur d'annulation d'EAB ; et
l'UE à double priorité est configuré pour stocker l'indicateur d'annulation de basse priorité et/ou l'indicateur d'annulation d'EAB dans une carte de module d'identité d'abonné universel, USIM, et déterminer si oui ou non il convient d'annuler la basse priorité et/ou l'EAB en fonction de l'indicateur d'annulation de basse priorité et/ou de l'indicateur d'annulation d'EAB ;
**caractérisé en ce que**,
le système comprend en outre un côté de réseau de projet de partenariat de troisième génération, 3GPP ;
dans lequel l'UE à double priorité est spécifiquement configuré pour déterminer si oui ou non l'indicateur d'annulation de basse priorité et/ou l'indicateur d'annulation d'EAB est/sont dans la carte USIM, et si oui ou non l'indicateur d'annulation de basse priorité et/ou l'indicateur d'annulation d'EAB indique(nt) une permission d'annuler la basse priorité et/ou l'EAB ; si l'UE à double priorité détermine que l'indicateur d'annulation de basse priorité et/ou l'indicateur d'annulation d'EAB est/sont dans la carte USIM, et que l'indicateur d'annulation de basse priorité et/ou l'indicateur d'annulation d'EAB indique(nt) une permission d'annuler la basse priorité et/ou l'EAB, alors l'UE à double priorité annule la basse priorité et/ou l'EAB, et transmet une demande de priorité normale au côté de réseau 3GPP ; ou alors, l'UE à double priorité n'annule pas la basse priorité et/ou l'EAB, et ne transmet pas de demande de priorité normale au côté de réseau 3GPP.

7. Système selon la revendication 6, dans lequel l'UE à double priorité est spécifiquement configuré pour, après la transmission d'une demande de basse priorité au côté de réseau 3GPP et à la condition de recevoir un message de rejet comportant un temps d'attente du côté de réseau 3GPP, déterminer si oui ou non l'indicateur d'annulation de basse priorité est dans la carte USIM, et si oui ou non l'indicateur d'annulation de basse priorité indique une permission d'annuler la basse priorité ; si l'UE à double priorité détermine que l'indicateur d'annulation de basse priorité est dans la carte USIM et que l'indicateur d'annulation de basse priorité indique une permission d'annuler la basse priorité, l'UE à double priorité annule la basse priorité, et transmet une demande de priorité normale au côté de réseau 3GPP ; ou alors, l'UE à double priorité n'annule pas la basse priorité, et ne transmet pas de demande de priorité normale au côté de réseau 3GPP.

8. Système selon la revendication 7, dans lequel le côté de réseau 3GPP comprend un noeud de support de service GPRS, SGSN, d'entité de gestion de mobilité, MME, et/ou un noeud B évolué, eNB ;
dans lequel le MME/SGSN est configuré pour, après la réception d'une demande de l'UE à double priorité, indiquer un paramètre d'EAB à l'eNB par le biais d'une signalisation de strate de non accès, NAS, ou, déterminer un temps d'attente et envoyer à l'UE à double priorité un message de rejet comportant le temps d'attente ; et
l'eNB est configuré pour, après la réception de l'indication du MME/SGSN, envoyer à l'UE à double priorité un message de rejet d'EAB qui indique un paramètre d'EAB, ou déterminer un temps d'attente et envoyer à l'UE à double priorité un message de rejet comportant le temps d'attente.

9. Équipement utilisateur, UE, à double priorité, comprenant un module de réception, un module de détermination et un module d'exécution ; dans lequel
le module de réception est configuré pour recevoir un indicateur d'annulation de basse priorité et/ou un indicateur d'annulation d'interdiction d'accès étendue, EAB, envoyé(s) par un serveur d'Alliance pour les Mobiles Ouverts, OMA - Gestion d'appareils Mobiles, DM ;
le module de détermination est configuré pour déterminer si oui ou non il convient d'annuler la basse priorité et/ou l'EAB en fonction de l'indicateur d'annulation de basse priorité et/ou de l'indicateur d'annulation d'EAB ; et
le module d'exécution est configuré pour exécuter une opération correspondante en fonction d'un résultat de détermination du module de détermination ;
l'UE à double priorité comprend en outre une carte de module d'identité d'abonné universel, USIM, dans lequel le module de réception est en outre configuré pour, après la réception de l'indicateur d'annulation de basse priorité et/ou de l'indicateur d'annulation d'EAB envoyé(s) par le serveur OMA DM, stocker l'indicateur d'annulation de basse priorité et/ou l'indicateur d'annulation d'EAB dans la carte USIM ;
**caractérisé en ce que**,
le module de détermination est spécifiquement configuré pour déterminer si oui ou non l'indicateur d'annulation de basse priorité et/ou l'indicateur d'annulation d'EAB est/sont dans une carte USIM, et si oui ou non l'indicateur d'annulation de basse priorité et/ou l'indicateur d'annulation d'EAB indique(nt) une permission d'annuler la basse priorité et/ou l'EAB ; si l'indicateur d'annulation de basse priorité et/ou l'indicateur d'annulation d'EAB est/sont dans la carte USIM, et si l'indicateur d'annulation de basse priorité et/ou l'indicateur d'annulation d'EAB indique(nt) une permission d'annuler la basse priorité et/ou l'EAB, alors le module de détermination est configuré pour déterminer l'annulation de la basse priorité et/ou de l'EAB ; ou alors, le module de détermination est configuré pour déterminer la non annulation de la basse priorité et/ou de l'EAB ; et
le module d'exécution est spécifiquement configuré pour, lorsque le module de détermination détermine l'annulation de la basse priorité et/ou de l'EAB, transmettre une demande de priorité normale à un côté de réseau de projet de partenariat de troisième génération, 3GPP ; lorsque le module de détermination détermine la non annulation de la basse priorité et/ou de l'EAB, le module d'exécution ne transmet pas de demande de priorité normale au côté de réseau 3GPP.

10. UE à double priorité selon la revendication 7, dans lequel le module de détermination est spécifiquement configuré pour, après la transmission par l'UE à double priorité d'une demande de basse priorité au côté de réseau 3GPP, et à la condition que l'UE à double priorité ait reçu un message de rejet comportant un temps d'attente du côté de réseau 3GPP, déterminer si oui ou non l'indicateur d'annulation de basse priorité est dans la carte USIM, et si oui ou non l'indicateur d'annulation de basse priorité indique une permission d'annuler la basse priorité ; si l'indicateur d'annulation de basse priorité est dans la carte USIM et si l'indicateur d'annulation de basse priorité indique une permission d'annuler la basse priorité, le module de détermination est configuré pour déterminer l'annulation de la basse priorité ; ou alors, le module de détermination est configuré pour déterminer la non annulation de la basse priorité ; et
le module d'exécution est spécifiquement configuré pour, lorsque le module de détermination détermine l'annulation de la basse priorité, transmettre une demande de priorité normale au côté de réseau 3GPP ; lorsque le module de détermination détermine la non annulation de la basse priorité, le module d'exécution ne transmet pas de demande de priorité normale au côté de réseau 3GPP.
